# EUROPEAN PATENT SPECIFICATION

(11) **EP 0 520 102 B1**
(45) Date of publication and mention of the grant of the patent: **17.05.1995**
(21) Application number: 91305785.7
(22) Date of filing: 26.06.1991
(51) Int. Cl.: G01V 3/06

(54) **Device for location of embedded objects**
Anlage für das Orten von versteckten Objekten
Dispositif pour localiser des objets cachés

(43) Date of publication of application: 30.12.1992
(73) Proprietor: YOKOI MANUFACTURING CO., Ltd, Neyagawa-City Osaka (JP)
(72) Inventor: Yokoi, Shin, Neyagawa-City, Osaka (JP)
(74) Representative: Tribe, Thomas Geoffrey

(56) References cited:
- EP-A- 0 045 486
- EP-A- 0 150 622
- WO-A-90/09601
- FR-A- 2 051 142
- GB-A- 2 006 438
- US-A- 3 471 772
- US-A- 4 039 938

## Description

The present invention relates to locating devices for location of embedded (buried) objects such as underground pipes, cables and the like; and relates particularly to the kind of locating device that enables a deeply embedded object to be located accurately by detection of an induced current emanating from the object. In this respect the main object of the invention is to provide such a device which can operate with small detection currents while minimising the effect of extraneous noise.

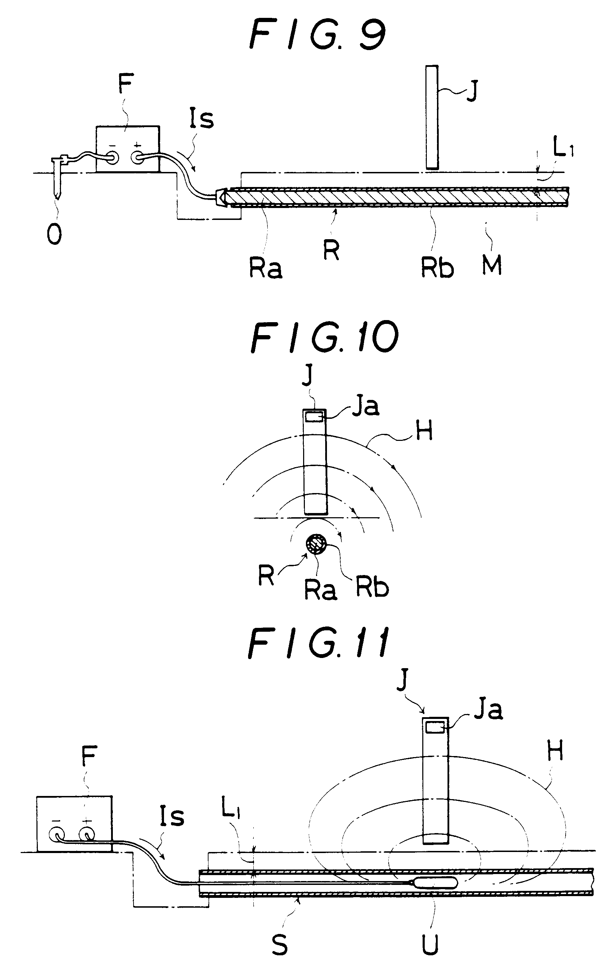

Figures 9 to 11 of the accompanying drawings illustrate a prior art device of the solenoid induction type. The device generally comprises a transmitter F and receiver J. In order to locate the power cable R and the like, initially it is necessary to connect the transmitter F and conductor Ra of the cable R as shown in Fig.9, and then to supply a location current Is having a frequency of 10Hz-500kHz to the conductor Ra from the transmitter F.

Said location current Is flows into the ground M through the distribution static capacity formed by the conductor Rb, insulator R, and ground M, and then it returns to the transmitter F through the earth electrodes O. Flow of the location current Is into the conductor Ra forms a magnetic field H as shown in Fig. 10 around the power cable R.

Next, a detection current is obtained in the receiving coil Ja by placing the receiver J equipped with the receiving coil Ja in said magnetic field H and then interlinking the receiving coil Ja and the magnetic field H. The detection current induced into the receiving coil Ja is processed by the signal processing current, the embedding depth of the power cable R, the horizontal direction position thereof and the like are calculated on the basis of the size and other parameters of the detection current, and they are indicated to the operator.

In order to locate the pipe S and the like, a compact originating coil U is inserted into the pipe S as shown in Fig. 11, and a location current Is is provided to this originating coil U from the transmitter F. Flow of the location current Is into said originating coil U generates a magnetic field H around the originating coil (U).

Next, place the receiver J equipped with a receiving coil Ja in said magnetic field H and cause the receiving coil Ja to generate a detection current. The embedding depth of the pipe S and the horizontal direction position thereof are calculated on the basis of the size and the like of this detection current and they are indicated to the operator.

If there is no other noise source near the power cable R and pipe S, the conventional solenoid type induction type embedded object locating device can perform accurate location of the embedded object by using a comparatively small location current Is, thus resulting in demonstration of excellent efficiency. However, the case where there is no so called noise source is very rare and in general, a noise source exists. It results in that a signal produced by the location current Is and a disturbance signal (hereinafter referred to as a noise signal) produced by a noise signal except the location current Is are induced and it becomes difficult to make an accurate indication of the embedding depth and horizontal location. This is particularly so in the case where the embedding depth L, of the power cable R or pipe S is large or in the case where the power cable R pipe S is shielded by some other conductive object.

A possible solution of said problem, is to increase the location current Is fed from the transmitter F and thereby diminish said noise ratio.

However, if the frequency of the location current Is becomes 10kHz greater, in many cases output value of the location current Is may be limited by the law, and it becomes impossible to increase the location current (Is) and so diminish the noise ratio.

The present invention aims at solving said problems for the conventional solenoid induction type embedded object locating device. More particularly these problems are that if the noise ratio increases by the influence of the external noise and the embedding depth of the embedded object is great, it is impossible to perform accurate location. Moreover if the frequency of the location current Is becomes 10kHz or greater, in many cases the output value of the location current Is may be limited by the law and it is impossible to increase the location current Is and diminish the noise ratio. Thus, the invention provides an embedded object locating device wherein the location capacity of an embedded object can be greatly heightened, by an automatic and in many cases approximately complete removal of the noise content which is being generated by the noise source, from the detection current detected by the receiving coil Ja of the receiver J.

French Patent 2,051,142 discloses a device which uses a separate reference signal generator and receiver to reduce the problem of noise, and detects the signals by way of a phase locked loop circuit. Moreover it causes a pair of coils to locate the object.

Accordingly the invention solves these problems by provision of a locating device for location of embedded objects such as underground pipes cables and the like which comprises a transmitter which is arranged to transmit an alternating current signal (Is) having a selected frequency and phase which generates an alternating magnetic field around the object to be located
and a receiver which includes a receiving coil and is arranged to receive a detection current induced in said receiving coil from said alternating magnetic field in dependence on the location of said object and
a detection unit (A) to process said detection current to indicate the location of said object,
the transmitter further comprising means for transmitting a reference signal (T) having the same frequency and phase as the alternating current signal generating said magnetic field, means (B) receiving said reference signal and a signal processor (C) which derives an output dependent on the received reference signal and the detection current
and the device being characterised in that the detection unit is equipped with first detection coils located in a first, upper, position and comprising a detection coil mounted in a horizontal direction and a detection coil mounted in a vertical direction which are combined into one pair and second detection coils located in a second, lower, position and comprising a detection coil mounted in a horizontal direction and a detection coil mounted in a vertical direction which are combined into one pair,
and the receiver further comprises an analog signal processor unit (c) equipped with a first filter for the output signal transmitted from said detection unit, a multiplier for the output signal from said first filter and the reference signal transmitted from said reference signal transmitter, and a second filter for the output from the multiplier,
a calculation processing unit (D) equipped with an A/D converter for converting the output signal transmitted from the analog signal processing unit into a digital signal,
a microprocessor for calculating the position of the embedded object by using the difference between the output signals of said detection coils located in said first, upper position and that of said detection coils located in said second, lower position, and
a display unit (E) for displaying the results of said calculation by said microprocessor.

The invention preferably includes a basic configuration (see the Figures for identification of the reference numerals) equipped with the following units: Transmitter 1 for supplying a location current Is of frequency fs for forming an alternating field to an embedded object; the receiver 2 for detecting the position of the embedded object on the basis of the detected value of said alternating field; the detection unit A equipped with a reference signal transmitter 1b for transmitting a reference signal T having the same frequency and phase as those of said location signal Is, in addition, said receiver 2 and location coil 3; the analogue signal processor C equipped with a multiplier for the output signal transmitted from said location unit A and the reference signal T transmitted from said reference signal transmitter 1b, and a filter for the output from the multiplier; the display unit E for indication of an output signal transmitted from the analogue signal processor C.

Another form of the invention is equipped with the following units; Transmitter 1 for supplying a loaction current Is of frequency fs for forming an alternating field to an embedded object or the transmission coil 8 inserted into the embedded object; the receiver 2 for detecting the position of the embedded object on the basis of the detected value of said alternating field; the detection unit A equipped with a reference signal transmitter 1b for transmitting a reference signal T having the same frequency and phase as those of said location current Is, in addition, said receiver 2 and detection coil 3; the analogue signal processor C equipped with a multiplier for the output signal transmitted from said detection unit A and the reference signal T transmitted from said reference signal transmitter 1b, and a filter for the output from the multiplier; the calculation processing unit D equipped with an A-D converter for converting the output signal transmitted from the analogue signal processing unit C into a digital signal, and a microprocessor for calculating the position of the embedded object by using a difference between the output signal of the detection coil on said lower position P₂ and that on said upper position P₁; the display unit E for said calculation result.

Flow of the location current Is of the frequency fs supplied from the transmitter I into the embedded electric conductor 4a (or transmitter 8 built-in the embedded object) generates an alternating field H around the electric conductor 4a (or oscillator 8). A reference signal T having the same frequency and phase as the location current Is is oscillated from the reference signal transmitter 1b.

On the other hand, placing the detection coil 3 of the receiver 2 on said magnetic field H causes the detection coil 3 and magnetic flux to be interlinked and induces the detection current IR to the detection coil 3.

The detection current Ir of said detection coil 3 contains a noise current IRn from the noise source in addition to the signal current IRs generated by the magnetic field of the location current Is. This detection current IR is passed through the 1st filter 10 after being amplified, and then the output signal Q near the frequency fs is fed to the multiplier 11.

In the multiplier 11, said output signal Q and the reference signal T from the reference signal transmitter 1b are multiplied, thus resulting in that the component having the same frequency and phase as those of the reference signal T in the output signal Q is changed into an AC content. The component having the same frequency as that fs of the reference signal T and differing in phase is removed.

The output signal V containing said direct current (DC) component fed from the multiplier 11 is removed the alternating current (AC) component contained in the signal V by the 2nd filter and only said DC component X is output.

If the detection coil 3 is one piece, the DC output X from the 2nd filter 12 is directly fed to the display 21 comprising meters and the position of an embedded object is presumed on the basis of the size of a needle shaking of the display 21.

If one piece of detection coil 3 is mounted on each of the lower position P₂ and upper position P₁ (the total number of the detection coils 3 = 2), or if a pair of detection coils 3 are mounted on each of the lower position P₂ and upper position P₁ (the total number of the detection coils 3 = 4), the DC output X fed from said 2nd filter is converted into a digital signal and then it is input into the microprocessor 19.

In the microprocessor 19, the signal Xa (or the signal Xa·Xa′) transmitted from the lower position P₂ and the signal Xb (or the signal Xb·Xb′) transmitted from the upper position P₁ are individually taken away. This causes the noise component contained in said DC current component (that is, the DC noise component from the noise source or the AC noise component that has passed through the 2nd filter 12, having the same frequency and phase as the reference signal (T) to to be taken away and disappeared, and the signal Xa-Xb (or the signal Xa-Xb·Xa′-Xb′) becomes only a component induced by the location current Is.

In the microprocessor, continuously the depth of the embedded object is calculated by using the data for the signal Xa-Xb (or the signal Xa-Xb·Xa′-Xb′), distance L₂ between the points P₁ and P₂, embedding depth L₁, distance L₃ between the ground G and point P₂, and the like, and it is indicated. Travel the receiver 2, measure the signal Xa-Xb (or the signal Xa-Xb·Xa′-Xb′) in the same way as that mentioned-above and calculate the horizontal direction position of the embedded object on the basis of the change amount and the like of the measurement value.

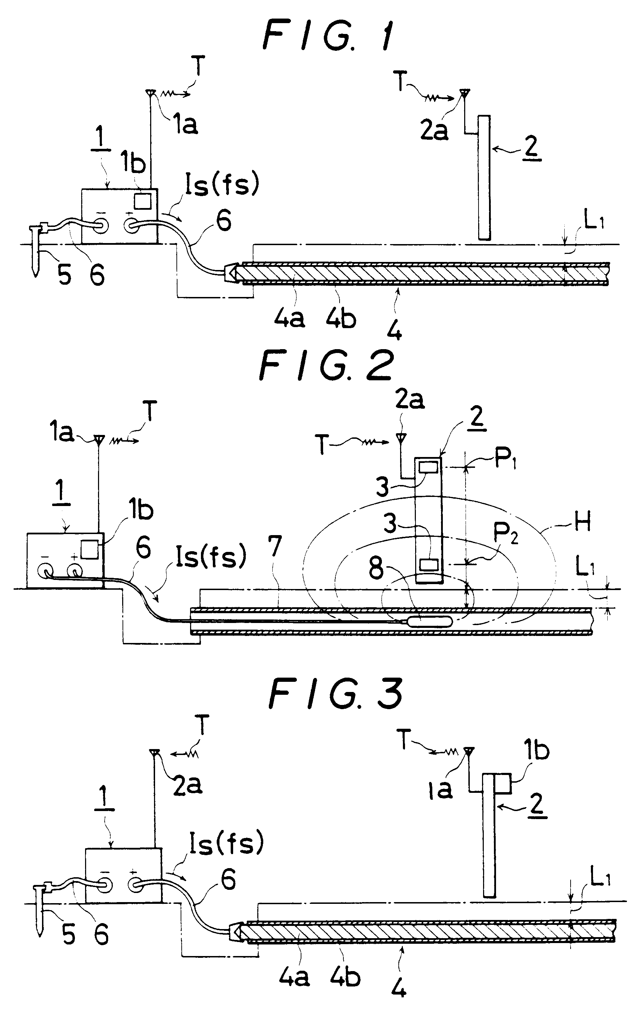

The following is the explanation of each embodiment of the embedded object locating device relating to the present invention on the basis of Figs.1∼8.

### [Brief description of the drawing]

Fig.1 is a general explanatory drawing for location of a power cable by the use of an embedded locating device of the present invention.

Fig.2 is a general explanatory drawing for location of a nonconductive pipe by the use of an embedded object locating device of the present invention.

Fig.9 is a general explanatory drawing for location of a power cable by the use of the prior art embedded object locating device.

Fig.10 is an explanatory drawing of the generation status of the alternating field H in Fig.9.

Fig.11 is an explanatory drawing for location of a nonconductive pipe by the use of the conventional embedded object detecting device.

Fig.1 is a general explanatory drawing of power cable location by means of an embedded object locating device of the present invention. In the figure, 1 shows a transmitter, 1a a reference signal transmission antenna, 1b a reference signal transmitter, 2 a receiver, 2a a receiving antenna of the reference signal, 3 a detection coil of the receiver, 4 a power cable, 4a a conductor, 4b an insulator, 5 an earth pole and 6 a lead wire. The greater visual difference from the conventional embedded object locating device exists in the points that the transmission antenna 1a of said reference signal is mounted on the transmitter 1 and that the receiving antenna 2a of the reference signal is mounted on the receiver 2.

For location of the power cable 4, initially supply a location current of current Is of the proper frequency fs to the conductor 4a from the transmitter 1 through the lead wire 6. From the transmission antenna 1a of the transmitter 1, transmit a reference signal T having the same frequency and phase as those of said location current Is generated in the reference signal transmitter 1b.

Next, operate the receiver 2, interlink the detection coil 3 of the receiver 2 with the alternating field generated by the location current Is to generate a reference signal T having the same frequency and phase as those of said location current Is generated in the reference signal transmitter 1b.

The detection current of said detection coil 3 and the reference signal T transmitted from the antenna 2a are input into the analogue signal processor of the receiver 2 as mentioned-later, here the necessary signal processing thereof is conducted, and then they are converted into a digital signal. Said digital signal is continuously input into the calculation processing unit D, here the embedding depth and horizontal direction position of the power cable 4 are calculated and the results thereof are indicated on the E portion of the display unit.

Fig.2 is a general explanatory drawing for location of the pipe 7 by the use of an embedded object locating device of the pres-invention. In the figure, 1 shows a transmitter, 1b a reference signal transmitter, 1a a transmission antenna of the reference signal, 2 a receiver, 2a a receiving antenna of the reference signal,3 a detection coil, 6 a lead wire, 7 a non-conductive pipe and 8 an oscillation coil.

For location of the pipe 7, initially insert the oscillation coil 8 into the pipe 7, provide it with a location current Is of the frequency fs, thereby making a magnetic field H. Oscilate a reference signal T from the reference signal transmitter 1b through the transmission antenna 1a.

Next, operate the receiver 2, generate a detection current in the detection coil 3 and together receive a reference signal T by using the receiving antenna 2a. And send said detection current and the reference signal T to the analogue signal processing unit D of the receiver 2 as aforementioned, and additionally, in the calculation processing unit D, calculate the embedding depth of the pipe 7 by using the data transmitted from said analogue signal processing unit C.

Said transmitter 1 is a publicly known oscillator and supplies a location current Is having a frequency fs of around 10Hz∼500KHz to the conductor 4a of the power cable 4 and the oscillation coil 8.

The transmitter 1 is equipped with a publicly known reference signal transmitter 1b for transmitting, from the antenna 1a, a reference signal T having the same frequency and phase as those of said location current Is.

Said location current Is and the frequency fs of the reference signal T can be optionally adjusted, and an optimum frequency can be properly selected according to the type of the power cable or pipe 7 to be located and the embedding conditions. Said reference signal transmitter 1b can be realized by using an audio communication transceiver sold in market.

Additionally, if the reference signal T is on an audio frequency band, it can be directly transmitted. If the frequency fs of the location current Is is low, it is permissible to code the reference signal T, place it on the carrier of the audio frequency band and transmit it.

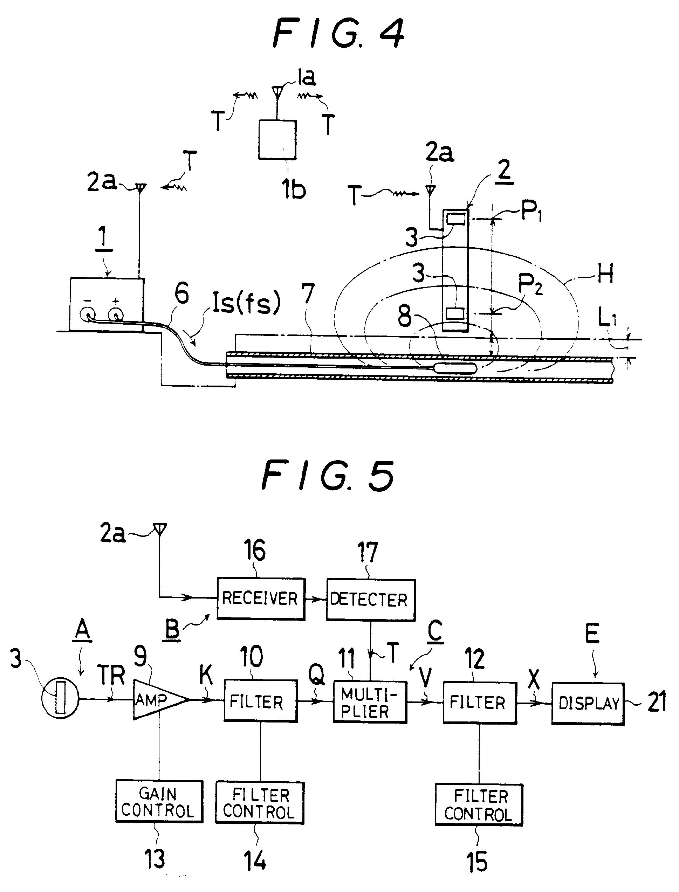

In the embodiments in said Figs.1 and 2, the reference signal transmitter 1b is mounted in the oscillator 1. However, it is unnecessary to mount the concerned reference signal transmitter 1b on the receiver 2 as shown in Fig.3 and it is permissible to mount the reference signal transmitter 1b separately from the oscillator 1 and receiver 2 as shown in Fig.4.
In the embodiments in said Figs.1 and 2, the reference signal T is made a wireless signal, but it is of course permissible to make the respective reference signal T a wire signal to be sent by using a line (the indication is omitted).

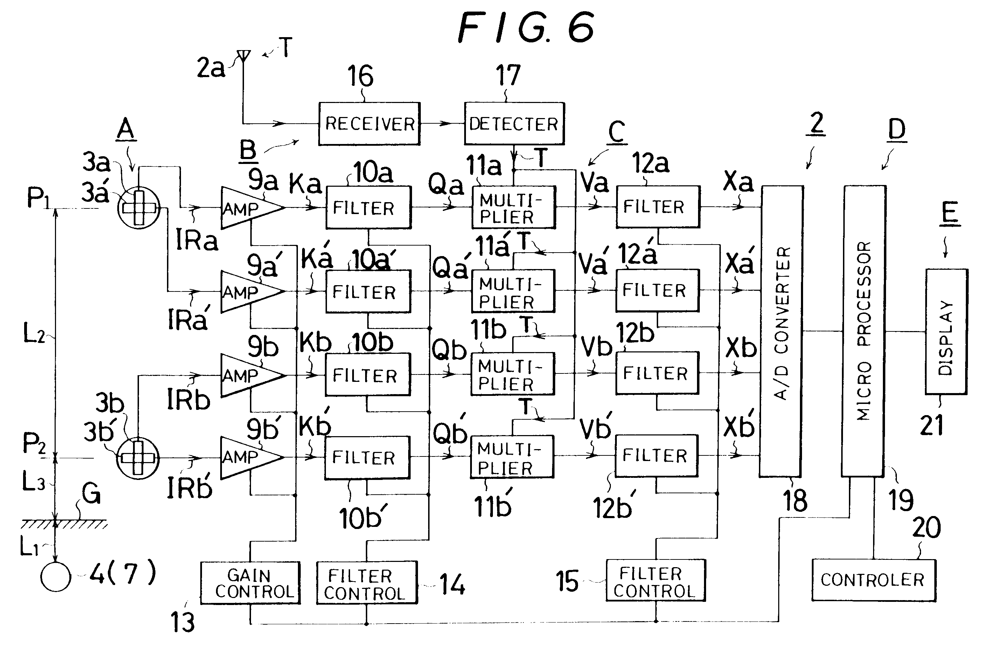

Fig.5 is a block diagram showing the configuration of the receiver 2 used for the invention as claimed in Claim 1. The concerned receiver 2 comprises a detection unit A, receiving unit B of the reference signal T, analogue signal processing unit C and display unit E.

Said detection unit A is formed out of one piece of coil 3 mounted vertically, and is retained in the position approx. 100∼300mm above the ground G.
Said reference signal receiving unit B is formed by a publicly known antenna 2a, receiver 16, detector 17 and the like, and this unit receives a reference signal T transmitted from the transmitter 1 and inputs it into the multiplier 11 of the analogue signal processing unit C.

Said analogue signal processing unit C is formed by a preamplifier, 1st filter 10, multiplier 11, 2nd filter 12, gain controller 13, 1st filter controller 14, 2nd filter controller 15 and the like. The display unit E is formed out of a DC type meter 21.

Fig.6 shows a block diagram indicating the configuration of the receiver 2 used for the invention as claimed in Claim 7. The concerned receiver 2 comprises a detection unit A, receiving unit B of the reference signal T, analogue signal processing unit C, calculation processing unit D and display unit E.

Said detection unit A is formed by two pieces of identical coil 3a·3b mounted vertically and two pieces of identical coil 3a′·3b mounted horizontally. The detection coil 3a and detection coil 3a′ have been combined into one pair and are being retained in the position P₁ approx.500∼700mm above the ground G. The detection coil 3b and detection coil 3b′ have been combined into one pair and are being retained in the position P₂ approx. 100∼200mm above the ground G.

Said reference signal receiving unit B is formed by a publicly known antenna 2a, receiver 16, detector 17 and the like, receives a reference signal T transmitted from the transmitter 1 and then inputs it into the multiplier 11 of the analogue signal processing unit C.

Said analogue signal processing unit C is formed by preamplifiers 9a∼9b′, 1st filters 10a∼10b′, multiplier 11a∼11b′, 2nd filters 12a∼12b′, gain controller 13, 1st filter controller 14, 2nd filter controller 15 and the like. Each said detection coils 3a∼3b′ and each analogue signal processing circuit added thereto form each signal channel of the micropressor and the individual analogue signal processing as mentioned-later is conducted.

Said calculation processing unit D is formed by an A-D converter 18, microprocessor 19, controller and the like, receives an output signal transmitted from the analogue signal processing unit C and performs various types of calculation processing as mentioned-later.

Next the following is the explanation of the operation of the receiver 2 used for the present invention on the basis of the receiver 2 as shown in Fig.6.
The detection currents IRa, IRa′·IRb, IRb′ generated in each of the detection coils 3a·3a′·3b·3b′ are individually input into the respective preamplifiers 9a·9a′·9b·9b′, and then they are amplified according to the amplification rate adjusted by the gain controller 13. In the detection currents IRa∼IRb′ of the concerned detection coils 3a∼3b′, a signal current IRs having the same frequency as that of the location current Is having a frequency fs transmitted from the transmitter and set appropriately in the range of 10Hz∼500KHz, and a noise current IRn generated by other noise source are contained.
The output signals Ka∼Kb′ transmitted from said preamplifiers 9a∼9b′ are input into the 1st filters 10a·10a′·10b·10b′ - the publicly known low-pass filter, and the frequency component lower than the cut-off frequency adjusted appropriately by the 1st filter controller 14 is removed out of the output signals Ka∼Kb′.
Said cut-off frequency is set at the value near the frequency fs of the location current Is.

The output signals Qa∼Qb′ transmitted from said 1st filters 10a∼10b′ are continuously input individually into the multipliers 11a·11a′·11b·11b′. A reference signal T is input into the concerned multipliers 11a∼11b′ from said reference signal receiving unit B.
This signal has been transmitted from the antenna 1a of said transmitter 1 and has the same phase and frequency as those of the location current Is of the transmitter 1.
In the multipliers 11a∼11b′, the signals Qa∼Qb′ transmitted from said 1st filters 10a∼10b′ and the reference signal T transmitted from the antenna 2a are multiplied.
Multiplication of the input signals Qa∼Qb′ and reference signal T causes the component having a reference frequency fs in the input signals Qa∼Qb′ and the same phase as that of the reference signal T to be converted into a DC one. The component having a reference signal fs in the input signals Qa∼Qb′ and differing in phase from the reference signal T is cut off. That is, in the concerned multipliers 11a∼11b′, the noise component having the same frequency as that of the frequency fs contained in the input signals Qa∼Qb′ is removed.

The outputs Va·Va′·Vb·Vb′ fed from said multipliers 11a∼11b′ are input into the 2nd filters 12a·12a′·12b·12b′ that operate as publicly known band-pass filters, and here the AC noise components contained in the signals Va∼Vb′ are cut-off. The cut-off frequency of the 2nd filters 12a∼12b′ is appropriately adjusted by the 2nd filter controller 15.
The output signals Xa∼Xb′ transmitted from the 2nd filters 12a∼ 12b′ wherein, out of the current detected by the detection coils 3a∼3b′, the noise component having the same frequency as the frequency fs and differing in phase has been removed by the multiplier 11, and the noise component having a frequency different from the frequency fs has been removed by the 1st filter 10 and 2nd filter 12, are equivalent to a detection current induced by a magnetic field H generated by the detection current Is.

Each of said preamplifiers 9a∼9b′, 1st filters 10a∼10b′ and 2nd filters 12a∼12b′ can be adjusted by a mutual interrelation of the gain and cut-off frequency, and concretly they are controlled via the gain controller 13 and both filter controllers 14·15 by using the microprocessor 19.
As said multipliers 11a∼11b′ and 2nd filters 12a∼12b′ operate as band-pass filters automatically matching to the frequency fs of the reference signal T, it is unnecessary to adjust the frequency beforehand.

The output signals Xa∼Xb′ transmitted from said 2nd filters 12a∼12b′ converted into digital signals by using the A-D converter 18, and thereafter they are input into the microprocessor 19. In the microprocessor 19, on the basis of the control by the controller 20, various types of calculation including those as described in Sections ① and ② below are performed and the results thereof are indicated on the display 21.
① Subtraction of the signals Xa and Xb and that of the signals Xa′ and Xb′ --- By these subtractions, a difference between the the sizes of the magnetic fields on the upper position P₁ and lower position P₂ is obtained. The common noise components contained in each of the signals Xa,Xb and Xb′ (For example, the noise component having the same frequency and phase as those of the reference signal T, AC noise component that has passed the 2nd filters 12a∼12b′ and the like) are subtracted and completely removed.
② Calculation of the depth of an embedded object-- Calculate an embedding depth L₁ on the basis of a difference between the strengthes of the magnetic field H on said upper position P₁ and said lower position P₂, the distances L₂, L₃ and the like.
③ Calculation of the horizontal direction position of the embedded object -- Calculate the horizontal direction position of the embedded object on the basis of a difference between the strengthes of said magnetic fields H, the strength of the magnetic field H, direction vector of the magnetic field H and the like during travelling of the position of the receiver 2.

In the embodiment of the receiver 2 in said Fig.6, the NO. of the detection coils 3 of the detection unit A is four (4) pcs and it is permissible to increase the NO. of this detection coils 3 and improve the location accuracy more. For example, it is permissible to combine three(3) detection coils toward the X,Y and Z axes and mount them on the upper-lower two stages (6 pcs of detection coil are required in total), or it is also permissible to combine two (2) detection coils toward the Z and Y axes and mount them on the upper-lower four (4) stages (8 pcs of detection coil are required in total).
In the embodiment of the receiver in Fig.6, the 1st filters 10a∼10b′ are applied. However these 1st filters 10a∼10b′ can be omitted in the case where the reference signals T to be input into the multipliers 11a∼11b′ are sine waves.
Additionally, in the embodiment of the receiver in Fig.6, the location current Is and frequency fs of the reference signal T are manually adjusted, but it is also permissible to set said frequency automatically at an optimum one according to the types of the power cable 4 and pipe 7, and the embedding status.
Moreover, in the embodiment of the receiver in Fig.6, only the results of the calculation processing unit D are indicated on the display 21 of the receiver 2, but it is also permissible to indicate the size of the location current Is on the transmitter 1 side, frequency fs, power voltage and the like, via another wireless channel, on the display 21.

In the embodiment in said Fig.6, a pair of detection coils 3a and 3a′ are mounted on the upper position P₁ and a pair of detection coils 3b and 3b′ are mounted on the lower position P₂. However, it is also permissible to, as shown in Fig.5, make the NO. of detection coils 3 of the detection unit A one piece and simplify the structure of the receiver 2. In the case of Fig.5, the DC output X is directly input into the meter type display 21, and the approximate position of an embedded object on the basis of the size of the needle shaking of the meter type display. That is, while travelling the receiver 2, locating the point wherein the needle shaking of the display 21 becomes a maximum leads to a finding that the embedded object exists beneath its point.

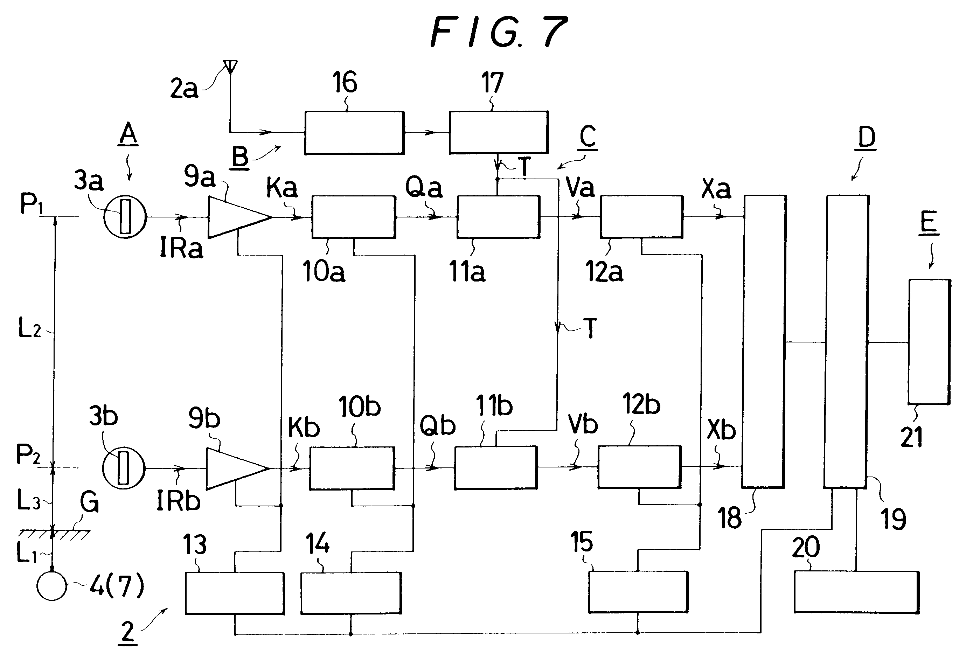

It is also permissible to, as shown Fig.7, individually mount one piece of detection coil 3a on the upper position P₁ and one piece of detection coil 3b on the lower position P₂. In this case, it is possible to calculate a depth of the embedded object by using signals (Xa-Xb), but it is impossible to seek a horizontal direction position of the embedded object accurately.

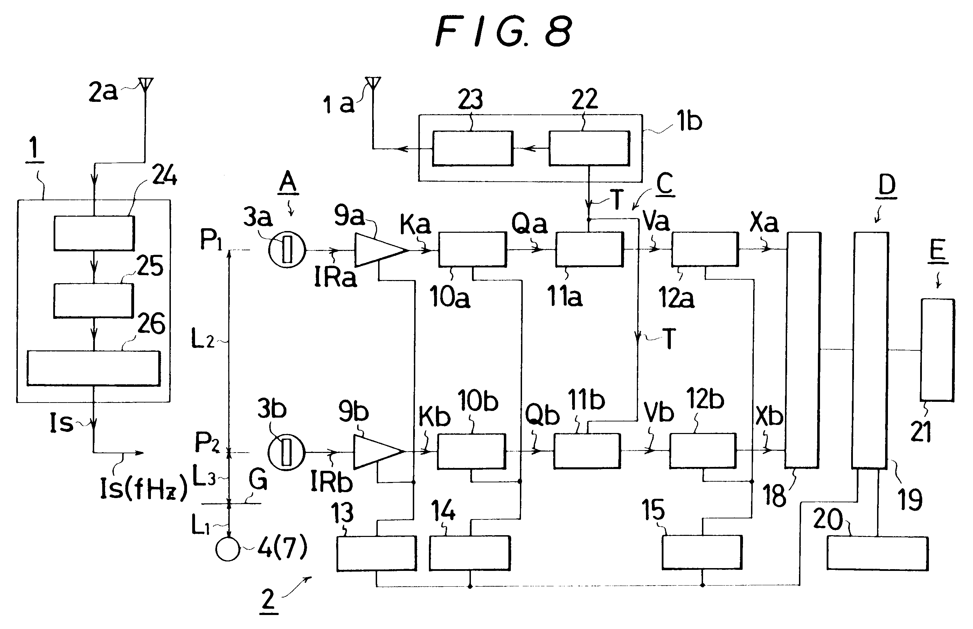

Fig.8 shows a block diagram of the receiver 2 and oscillator 1 in the case where the reference signal transmitter 1b is mounted on the receiver 2 side. However, the detection unit A of the receiver 2 is formed by the detection coil 3a mounted on the upper position P₁ and detection coil 3b mounted on the lower position P₂.

In Fig.8, 22 shows an oscillation unit of the reference singal transmitter 1b, 23 a transmission unit, 24 a receiving unit of the reference signal T mounted on the oscillator 1 side, 25 an oscillation amplifying unit and 26 a phase adjusting unit.

### [Effect of the invention]

The present invention adopts a configuration that a reference signal transmitter 1b for oscillating a reference signal T having the same frequency as that of the location current Is to be supplied to an embedded object (or the oscillator 8 built-in the embedded object) from the transmitter 1, and together a multiplier 11 of the output signal Q and reference signal T transmitted from detection unit A is mounted on the analogue signal calculation unit C of the receiver 2.
It results in that multiplication of the output signal Q and reference signal T allows the noise component having the same frequency as the frequency fs of the reference signal and differing in phase to be automatically cut-off. As the signal component having the same frequency as the frequency fs of the reference signal T is converted into a DC component, it becomes very convenient for digitization of a signal.
In the invention as claimed in Claim 7, the receiving unit A comprises a detection coil mounted on the upper position P₁ and that mounted on the lower position P₂, together the output signal of the individual detection coil is parallely processed and then in the calculation processing unit D, a difference between the detections signals on the upper position P₁ and lower position P₂ is calculated.

It results in that the noise components contained in the both upper and lower coils (for example, the DC noise component from the noise source, having the same frequency and phase as those of the reference signal T contained in the output signal of the multiplier, and the AC noise component that has passed through the filter 12) can be almost completely removed and the signal X input into the calculation processing unit D turns to have less noise component.

Thus, as the present invention can remarkably reduce the noise rate of what is called a detection signal, even the deeply embedded object can be accurately located and in the case of a embedded conductor, the conductor can be located over a long distance. Even if the location current Is is small, it can be accurately located and turns to give no bad influence to other communication facilities.

## Claims

1. A locating device for location of embedded objects such as underground pipes, cables and the like which comprises a transmitter (1) which is arranged to transmit an alternating current signal (Is) having a selected frequency and phase which generates an alternating magnetic field around the object to be located
and a receiver (2) which includes a receiving coil and is arranged to receive a detection current induced in said receiving coil from said alternating magnetic field in dependence on the location of said object and
a detection unit (A) to process said detection current to indicate the location of said object,
the transmitter further comprising means (1b) for transmitting a reference signal (T) having the same frequency and phase as the alternating current signal generating said magnetic field, means (B) receiving said reference signal and a signal processor (C) which derives an output dependent on the received reference signal and the detection current
and the device being characterised in that the detection unit is equipped with first detection coils (3) located in a first, upper, position and comprising a detection coil (3a′) mounted in a horizontal direction and a detection coil (3a) mounted in a vertical direction which are combined into one pair and second detection coils located in a second, lower, position and comprising a detection coil mounted in a horizontal direction (3b′) and a detection coil (3b) mounted in a vertical direction which are combined into one pair,
and the receiver further comprises an analog signal processor unit (c) equipped with a first filter (10) for the output signal transmitted from said detection unit, a multiplier (11) for the output signal from said first filter and the reference signal transmitted from said reference signal transmitter, and a second filter (12) for the output from the multiplier,
a calculation processing unit (D) equipped with an A/D converter (18) for converting the output signal transmitted from the analog signal processing unit into a digital signal,
a microprocessor (19) for calculating the position of the embedded object by using the difference between the output signals of said detection coils located in said first, upper position and that of said detection coils located in said second, lower position, and
a display unit (E) for displaying the results of said calculation by said microprocessor.

2. Locating device as claimed in claim 1 in which there are a plurality of signal processing channels comprising a preamplifier (9), a first filter (10), a signal multiplier (11) and a second filter (12) arranged in parallel with the analog signal processor unit.

3. Locating device as claimed in Claim 1, wherein a reference signal transmitter (1G) is mounted on the transmitter (1) and a means for receiving the reference signal (T) is mounted on the receiver (2).

4. Locating device as claimed in claim 1 wherein a wireless signal is applied as the reference signal (T).

5. Locating device according to claim 1, in which a wire fed signal is applied as the reference signal (T).

6. Locating device as claimed in Claim 1, wherein the reference signal transmitter (1G) is arranged to transmit a reference signal (T) having a waveform similar to that of the location current.

7. Locating device as claimed in Claim 1, wherein the horizontal direction position and vertical direction position of the embedded object are arranged to be calculated by using the built-in microprocessor in the calculation processing unit (D).

## Patentansprüche

1. Ortungsgerät zum Orten von verdeckten Gegenständen, wie im Erdreich oder unter Putz verlaufenden Rohren, Kabeln und dergleichen, mit
einem Sender (1) in einer Anordnung zur Übermittlung eines Wechselstromsignals (Is) ausgewählter Frequenz und Phase, das ein alternierendes magnetisches Feld um den zu ortenden Gegenstand erzeugt
einem Empfänger (2), der eine Empfängerspule aufweist und so angeordnet ist, daß ein Detektorstrom aufgenommen wird, der von dem abhängig von der Örtlichkeit des verdeckten und zu ortenden Gegenstandes alternierenden magnetischen Feld in die Empfängerspule induziert wird und
einer Detektoreinheit (A) zur Verarbeitung des Detektorstromes für die Anzeige des Ortes des zu ortenden Gegenstandes,
wobei der Sender einschließt
ein Mittel (1b) zur Übertragung eines Referenzsignales (T), das die gleiche Frequenz und Phase wie das das magnetische Feld erzeugende Wechselstromsignal hat,
ein Mittel (B) zum Empfang des Referenzsignales und schließlich
einen Signalprozeßrechner (C) zur Ableitung eines Ausgangssignales abhängig von dem ihm zugeführten Referenzsignal und dem Detektorstrom
und mit einer Kennzeichnung des Ortungsgerätes dadurch, daß
die Detektoreinheit ausgerüstet ist mit
ersten Detektorspulen (3) in einer ersten, oberen Position mit
einer Detektorspule (3a′) in einer horizontalen Anordnung und
einer Detektorspule (3a) in einer vertikalen Anordnung,
wobei diese beiden Detektorspulen ein Spulenpaar bilden,
zweiten Detektorspulen in einer zweiten, unteren Position mit
einer Detektorspule (3b′) in horizontaler Anordnung und
einer Detektorspule (3b) in vertikaler Anordnung,
wobei auch diese Detektorspulen ein Spulenpaar bilden,
der Empfänger ferner aufweist, eine Analogprozeßrechnereinheit (c), die ausgestattet ist mit
einem ersten Filter (10) für das von der Detektoreinheit ausgehende Ausgangssignal,
einer Multipliziereinheit (11) für das aus dem ersten Filter kommende Ausgangssignal und das vom Referenzsignalsender übermittelte Referenzsignal,
einem zweiten Filter (12) für das Ausgangssignal der Multipliziereinheit und
einer Kalkulationsrechnereinheit (D), die ausgestattet ist mit einem Wechsel/Gleichstromwandler (18) zur Umwandlung des von der Analogsignalrechnereinheit ausgehenden Ausgangssignales in ein digitales Signal
ein Mikroprozessor (19) zur Errechnung der Position des verdeckten Gegenstandes unter Nutzung der Differenz zwischen den Ausgangssignalen der Detektorspulen, die in der ersten, obere Position angeordnet sind und den Ausgangssignalen der Detektorspulen, die der zweiten, unteren Position angeordnet sind, vorgesehen ist und
eine Wiedergabeeinheit (E) zur Wiedergabe der Ergebnisse der Berechnung durch den Mikroprozessor vorgesehen ist.

2. Ortungsgerät wie in Anspruch 1 beansprucht, das einschließt eine Mehrzahl von Signalrechnerkanälen, die aufweisen einen Vorverstärker (9), ein erstes Filter (10), eine Signalmultipliziereinheit (11) und ein zweites Filter (12) in Parallelschaltung mit der Analogsignalrechnereinheit.

3. Ortungsgerät wie in Anspruch 1 beansprucht, bei dem auf dem Sender (1) ein Referenzsignalsender (1G) und auf dem Empfänger (2) ein Mittel zum Empfang des Referenzsignales (T) angeordnet ist.

4. Ortungsgerät wie in Anspruch 1 beansprucht, bei dem als Referenzsignal (T) ein drahtlos zu übermittelndes Signal verwendet wird.

5. Ortungsgerät nach Anspruch 1, bei dem als Referenzsignal (T) ein per Draht zu übermittelndes Signal verwendet wird.

6. Ortungsgerät wie in Anspruch 1 beansprucht, gekennzeichnet durch eine Anordnung des Referenzsignalübermittlers (1G) derart, daß ein Referenzsignal (T) übermittelt wird, dessen Wellenform ähnlich der des Lokalisierungsstromes ist.

7. Ortungsgerät wie in Anspruch 1 beansprucht, bei dem die Position des verdeckten Gegenstandes in horizontaler und vertikaler Richtung unter Verwendung des Mikroprozeßrechners ermittelt werden, der Teil der Prozeßrechnereinheit (D) ist.

## Revendications

1. Un dispositif de localisation pour localiser des objets enterrés, tels que des tuyaux souterrains, des câbles et similaires qui comprend un émetteur (1) qui est équipé pour émettre un signal de courant alternatif (Is) ayant une fréquence et une phase choisies qui produit un champ magnétique alternatif autour de l'objet à localiser,
et un récepteur (2) qui comprend une bobine de réception et est prévu pour recevoir un courant de détection induit dans ladite bobine de réception à partir dudit champ magnétique alternatif en fonction de la localisation dudit objet et
une unité de détection (A) pour traiter ledit courant de détection afin d'indiquer la localisation dudit objet,
l'émetteur comprenant en outre des moyens (1b) pour émettre un signal de référence (T) ayant la même fréquence et la même phase que le signal de courant alternatif produisant ledit champ magnétique, des moyens (B) recevant ledit signal de référence et un processeur de signaux (C) qui fournit une sortie dépendant du signal de référence reçu et du courant de détection
et le dispositif étant caractérisé en ce que l'unité de détection est équipée de premières bobines de détection (3) placées dans une première position supérieure et comprenant une bobine de détection (3a′) montée dans une direction horizontale et une bobine de détection (3a) montée dans une direction verticale qui sont combinées en une paire, et de secondes bobines de détection placées dans une seconde position inférieure et comprenant une bobine de détection montée dans une direction horizontale (3b′) et une bobine de détection (3b) montée dans une direction verticale qui sont combinées en une paire,
et le récepteur comprend en outre une unité de traitement de signaux analogiques (c) équipée d'un premier filtre (10) pour le signal de sortie émis par ladite unité de détection, d'un multiplicateur (11) pour le signal de sortie dudit premier filtre et pour le signal de référence émis par ledit émetteur de signaux de référence, et d'un second filtre (12) pour la sortie du multiplicateur,
une unité de traitement de calcul (D) équipée d'un convertisseur A/N (18) pour convertir le signal de sortie émis par l'unité de traitement de signaux analogiques en un signal numérique,
un microprocesseur (19) pour calculer la position de l'objet enterré en utilisant la différence entre les signaux de sortie desdites bobines de détection placées dans ladite première position supérieure et desdites bobines de détection placées dans ladite seconde position inférieure, et
une unité d'affichage (E) pour afficher les résultats dudit calcul par ledit microprocesseur.

2. Dispositif de localisation comme revendiqué à la revendication 1, dans lequel se trouve une pluralité de canaux de traitement de signaux comprenant un pré-amplificateur (9), un premier filtre (10), un multiplicateur de signaux (11) et un second filtre (12) montés en parallèle avec l'unité de traitement de signaux analogiques.

3. Dispositif de localisation comme revendiqué à la revendication 1, dans lequel un émetteur de signaux de référence (1G) est monté sur l'émetteur (1) et des moyens pour la réception du signal de référence (T) sont montés sur le récepteur (2).

4. Dispositif de localisation comme revendiqué à la revendication 1, dans lequel un signal de type radio est appliqué en tant que signal de référence (T).

5. Dispositif de localisation comme revendiqué selon la revendication 1, dans lequel un signal guidé par fil est appliqué en tant que signal de référence (T).

6. Dispositif de localisation comme revendiqué à la revendication 1, dans lequel l'émetteur de signaux de référence (1G) est prévu pour émettre un signal de référence (T) ayant une forme d'onde similaire à celle du courant de localisation.

7. Dispositif de localisation comme revendiqué à la revendication 1, dans lequel la position de direction horizontale et la position de direction verticale de l'objet enterré sont disposées pour être calculées par l'utilisation du microprocesseur incorporé dans l'unité de traitement de calcul (D).
